# EUROPEAN PATENT SPECIFICATION

(11) **EP 3 510 681 B1**
(45) Date of publication and mention of the grant of the patent: **30.12.2020**
(21) Application number: 17768726.6
(22) Date of filing: 07.09.2017
(51) Int. Cl.: H02G 11/00, H02G 3/04

(54) **RETENTION DEVICE FOR FLEXIBLE CABLES**
HALTEVORRICHTUNG FÜR FLEXIBLE KABEL
DISPOSITIF DE RÉTENTION POUR CÂBLES FLEXIBLES

(30) Priority: 12.09.2016 IT 201600091756
(43) Date of publication of application: 17.07.2019
(73) Proprietor: ENCABLIST S.r.l., 60125 Ancona (AN) (IT)
(72) Inventor: CAPULLI, Edoardo, 60125 Ancona (AN) (IT); CAPULLI, Emma, 60125 Ancona (AN) (IT); DINI, Andrea, 60125 Ancona (AN) (IT)
(74) Representative: Cacciamani, Clizia
(86) International application number: PCT/EP2017/072512
(87) International publication number: WO 2018/046620

(56) References cited:
- EP-A2- 0 893 865
- EP-A2- 1 220 398
- WO-A1-2005/022560
- WO-A1-2013/020340
- WO-A2-01/08280
- DE-U1-202015 006 038
- FR-A1- 2 242 795
- FR-A3- 2 990 049
- JP-A- 2008 005 608
- US-A1- 2012 121 120
- US-A1- 2016 254 076

## Description

The present patent application for industrial invention relates to a retention device for flexible cables, such as for example electrical cables of household appliances and electronic devices.

As it is known, household appliances and electronic devices are provided with electrical cables for connecting the device to the electrical mains or to another device. Said electrical cables are generally long and cumbersome.

The most typical and annoying drawbacks of said cables are:
- the cables can get entangled, creating a tangle and making it difficult to identify the single cable,
- the cables occupy a large part of the desk,
- it is impossible to connect multiple cables to only one inlet (i.e. two or more USB devices to be alternately connected to only one inlet),
- the cables cannot be easily separated or joined for cleaning the working space.

Retention devices of a flexible cable are known, but none of them is able of simultaneously solving all the aforementioned problems. Said devices comprise a cavity intended to house and hold the cable after bending it in multiple sections. Said devices have fastening means for being fastened together. However, the fastening means are disposed in a given position of the device. Therefore, said devices are not versatile and do not permit to have different mounting configurations.

Moreover, the fastening means interfere with the housing that contains the cable, thus considerably reducing the space of said housing. Consequently, the housing of the cable needs to be over-dimensioned, to the detriment of the total volume of the device.

DE202015006038 U1 discloses a retention device where electriccables may be attached or joined together and which can be separated, for example via hook-and-loop closure, plug sockets, etc.

EP0893865A1 discloses a flexible cable-run for the containment of electrical cables and similar of a type including a base fitted with a plurality of fin elements extending along its longitudinal edges so as to form parts of the walls of a cable run in which the plurality of fin elements are rigidly connected to an edge and have a free extremity, opposite to the one connected to the edge that either faces directly the extremity of the plurality of fin elements of the other edge or enters the space "d" provided between one or more successive fin elements extending from the opposite edge, so that the extremities are arranged along a single plane.

The purpose of the present invention is to remedy the drawbacks of the prior art, by disclosing a device according to claim 1 that fastens and retains the flexible cable in a practical, easy, rapid and effective way.

Another purpose is to provide such a device that is aesthetically pleasant and allows for fastening the flexible cable to a support.

The advantages of the device according to the present invention are evident, wherein the provision of three fastening/unfastening means, which are angularly spaced, makes it possible to fasten the device to three electronic devices according to different mounting configurations.

For the sake of clarity, the description of the device according to the invention continues with reference to the attached drawings, which have a merely illustrative, not limiting value, wherein:
Fig. 1 is an axonometric view of the device according to the invention, in a retention step of a cable;
Fig. 2 is an axonometric view of the device of Fig. 1, without cable;
Fig. 3 is a diagrammatic top view of six devices according to the invention, fastened together;
Fig. 4 is an axonometric view of a variant of the device of Fig. 2;
Fig. 5 is an axonometric view of the device of Fig. 1, wherein a flexible cable is inserted in a cavity of the device and has an "S"-bent configuration; and
Fig. 6 is a diagrammatic top view of five devices according to the invention, fastened together, with seven additional fastening possibilities in multiple directions.

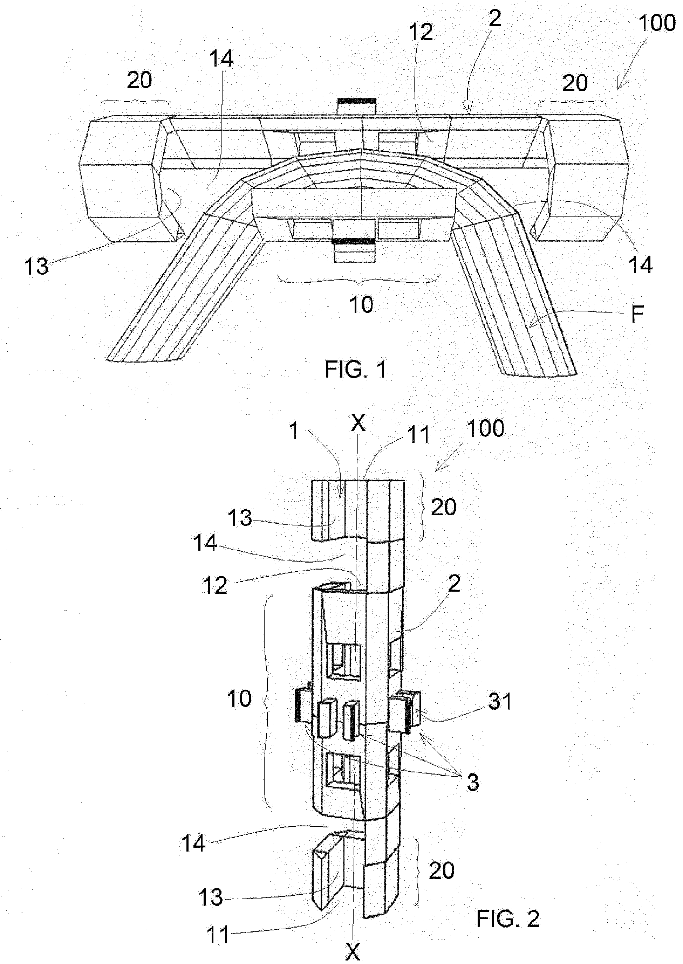

With reference to Fig. 1, a device according to the invention is disclosed, which is generally indicated with reference numeral 100.

The device (100) is intended to house a portion of a flexible cable (F).

The flexible cable (F) can have a different thickness according to the use. For example, flexible cables (F) with a small diameter (lower than or equal to 2.4 mm) are used for earphones or battery chargers, whereas flexible cables (F) with a large diameter (higher than 2.4 mm) are used for connecting electronic devices or household appliances. Advantageously, the flexible cable (F) comprises an external coating made of rubber material.

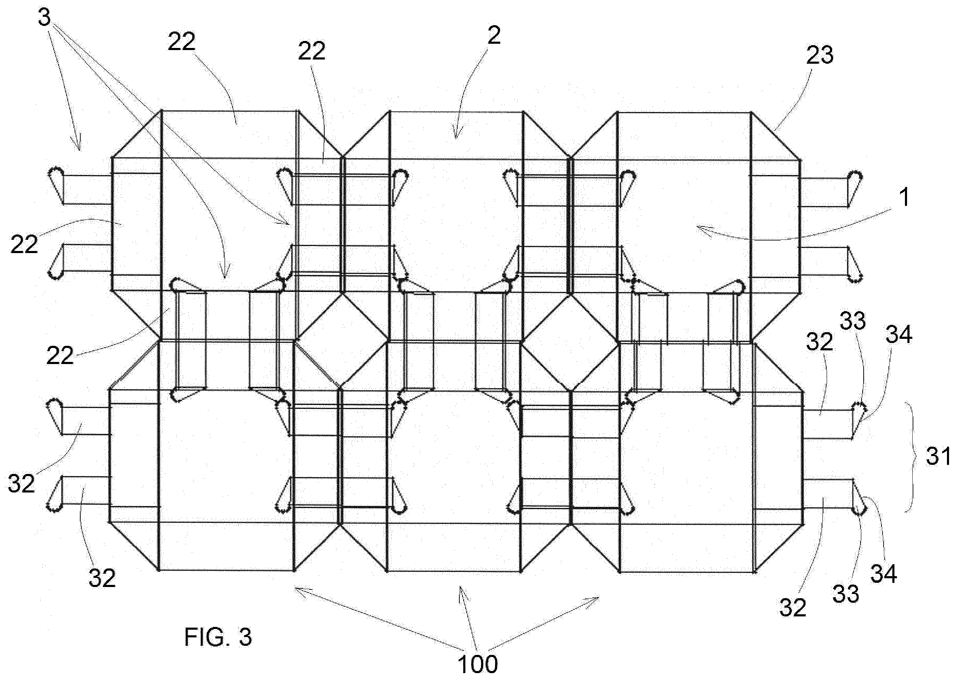

With reference to Figs. 2 and 3, the device (100) has a polyhedral elongated shape, with a polygonal section, such as for example an octagon. Alternatively, the device (100) can have a rectangular, pentagonal, hexagonal or triangular section, or a cylindrical shape with circular section.

The device (100) has a longitudinal axis (X). When the flexible cable (F) is housed straight in the device (100), the longitudinal axis of the flexible cable (F) is parallel to the longitudinal axis (X) of the device.

The device (100) comprises a perimeter wall (2) that defines an axial cavity (1) intended to house the flexible cable (F);

The perimeter wall (2) comprises at least four sides (22). Each side (22) has a thickness of approximately 1-2 mm. The device (100) comprises two axial openings (11) disposed at the opposite ends of the perimeter wall (2) and in communication with the axial cavity (1); The axial openings (11) are used for inserting the flexible cable (F) inside the axial cavity (1).

With reference to Figs. 1 and 2, the device (100) comprises at least two radial openings (12, 13) obtained in the perimeter wall (2) of the device (100) and in communication with the axial cavity (1). The radial openings (13) are used for inserting the flexible cable inside the axial cavity (1). Said two radial openings (12, 13) comprise a first radial opening (12) and a second radial opening (13) disposed in diametrally opposite positions.

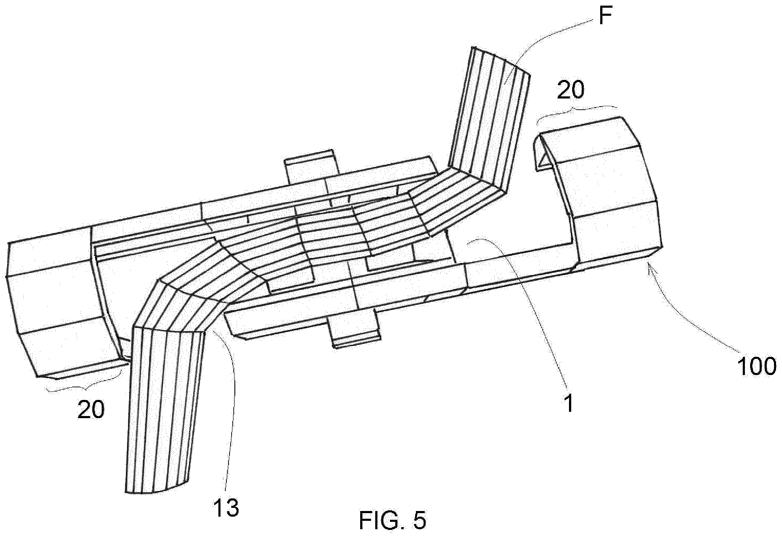

A slot (14) is obtained in the perimeter wall (2), between the two radial openings (12, 13). In view of the above, the flexible cable (F) is inserted in the first radial opening (12), and is then passed through the slot (14) in order to be inserted in the second radial opening (13), in such a way to bend in an "S"-shaped configuration, as shown in Fig. 5.

As shown in Figs. 1, 2 and 3, the device (100) comprises a central portion (10) of the perimeter wall that defines the first radial opening (12), and at least one end portion (20) of the perimeter wall disposed at one end of the device. The end portion (20) of the perimeter wall defines the second radial opening (13). Preferably, the end portion (20) is flexible in such a way to get deformed for introducing the flexible (F) in the axial cavity (1). The central portion (10) and the end portion (20) have a "C"-shaped cross-section.

The device (100) can comprise two end portions (20) disposed at the ends of the device, as shown in Fig. 2. The two end portions (20) define second radial openings (13) in opposite position to the first radial opening (12) defined by the central portion. In such a case, two slots (14) are provided between the end portions (20) and the central portion. In such a way, the flexible cable (F) can be inserted in the radial openings (12, 13) in a zigzag configuration.

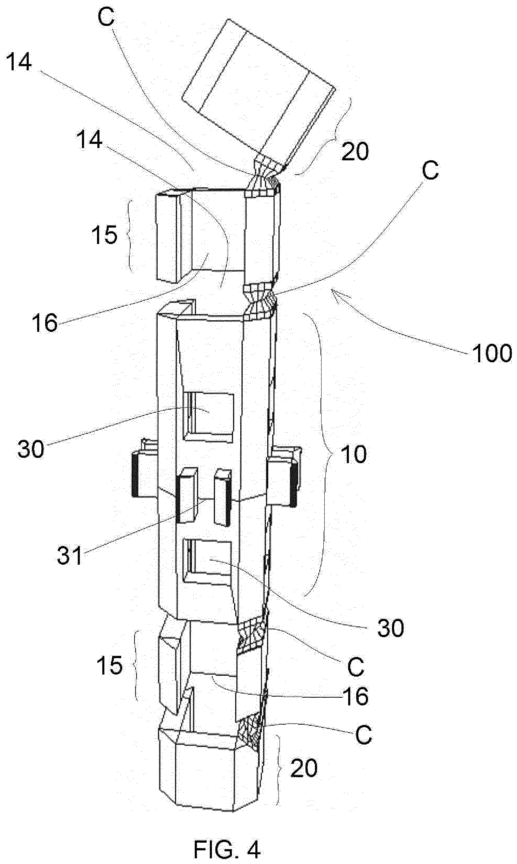

With reference to Fig. 4, one or more intermediate portions (15) of the perimeter wall can be provided between the central portion (10) and each end portion (20). The intermediate portions (15) have a "C"-shaped cross-section and define radial openings (16) for inserting the cable (F). Slots (14) are provided between the central portion and the two intermediate portions and between the two intermediate portions and the end portions. The cable (F) passes through the slots (14) in a zigzag configuration.

The radial openings (16) of the intermediate portions (15) are disposed in opposite position with respect to the radial openings of the adjacent portions. In view of the above, the cable (F) is forced into a zigzag trajectory inside the axial cavity (1), passing through the radial openings (12, 13, 16) and the slots (14) between the various portions (10, 15, 20) of the perimeter wall.

The length of the end portions (20) and of the intermediate portions (15) of the perimeter wall is lower than the length of the central portion (10). In this way, the end portions (20) and the intermediate portions (15) can easily bend elastically for inserting the flexible cable (F).

With reference to Figs. 2 and 3, the device (100) comprises fastening/unfastening means (3) disposed in the perimeter wall (2) of the device to fasten/unfasten the device (100) with another device (100). So, multiple devices (100) can be joined together to put the flexible cables (F) in order.

Said fastening/unfastening means (3) comprise first fastening/unfastening means, second fastening/unfastening means and third fastening/unfastening means disposed on the perimeter wall (2) in angularly spaced position.

If the perimeter wall has a polygonal perimeter, with at least four sides (22), the fastening/unfastening means are disposed on three sides (22) of the perimeter wall of the device (100).

Each of the first fastening/unfastening means, of the second fastening/unfastening means and of the third fastening/unfastening means is of male-female type. Each of said fastening/unfastening means (3) comprises:
- a male element (31) protruding from one of the three sides (22) of the perimeter wall; and
- at least one female element (30) consisting in an opening obtained on one of the three sides (22) of the perimeter wall.

Such an opening of the female element (30) is intended to house the male element (31) and, advantageously, has a square shape.

Because of the provision of said fastening/unfastening means (3) that are disposed on three sides (22) of the perimeter wall of the device (100), it is possible to fasten multiple devices (100) together according to the different mounting configurations. In other words, a device (10) can be fastened to three devices (100). So, it is possible to dispose a plurality of devices (100) along the same flexible cable (F), roll the flexible cable (F) and fasten overlapped sections of the flexible cable (F) easily and rapidly by fastening the devices (100) together by means of the fastening/unfastening means (3), regardless of the direction and of the position of the devices (100).

Advantageously, the female elements (30) comprise two openings on each of the three sides (22) of the perimeter wall, and the male element (31) is disposed between the two openings of the female elements (30). In this way, the device can be freely rotated by 180°, without having a preferred fastening direction.

The male element (31) of the fastening/unfastening means (3) comprises two elastic tabs (32) that can be inserted in an opening of the female element (30) of another device (100) in elastic snap mode.

With reference to Fig. 3, each elastic tab (32) comprises a retention tooth (33) with a tapered surface (34).

In this way, when the male element (31) of a device (100) is inserted in one of the openings of the female element (30) of another device, the tapered surfaces (34) of the retention teeth touch the borders of the opening of the female element (30) and elastically bend inwards. When the retention teeth (33) pass beyond the border of the opening, the elastic tabs (32) are elastically snapped outwards and the retention teeth (33) are stopped against the border of the opening, retaining the two devices fastened together.

Advantageously, the perimeter wall (2) defines an octagonal perimeter with four long sides (22) that are joined by means of four short sides (23). In this way, when the elastic tabs (32) are inserted in the opening of the female element (30), the retention teeth (33) of the elastic tabs are stopped against the cable (F) and are elastically bent towards the short side (23) of the perimeter wall, thus using the maximum width possible of the axial cavity (1) to house the cable (F).

With reference to Fig. 4, the intermediate portions (15) of the device (100) are advantageously hinged to the central portion (10) by means of hinges (C). The end portions (20) are hinged to the intermediate portions (15) by means of hinges (C). In this way, the intermediate portions (15) and the end portions (20) can rotate one with respect to the other and with respect to the central portion, favoring the insertion of the cable (F) in the axial cavity (1) of the device.

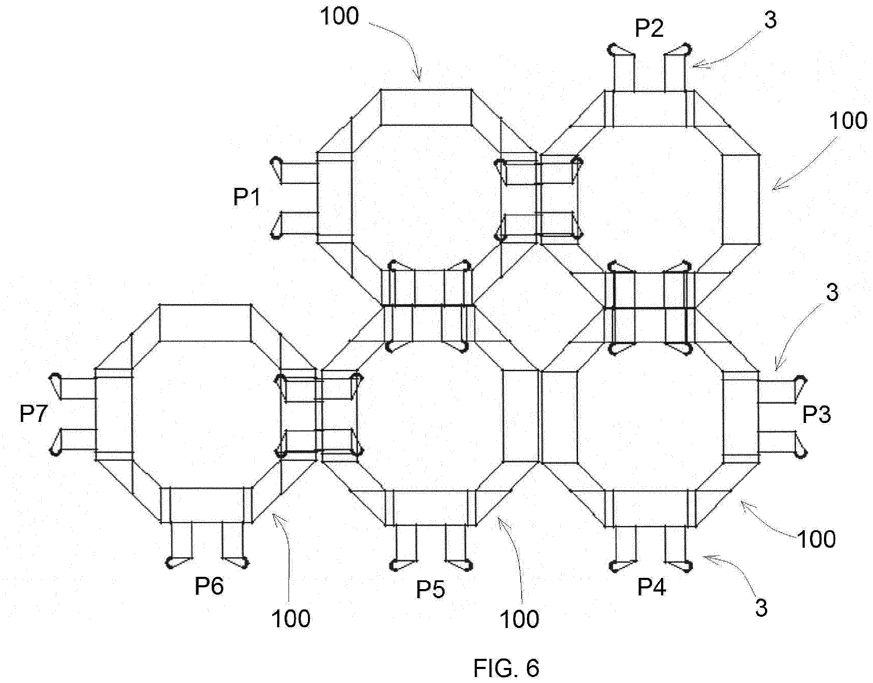

Fig. 6 shows a composition of five devices (100) that are fastened together. In such a composition seven fastening/unfastening means (3) are free in seven different positions (P1, P2, P3, P4, P5, P6, P7).

## Claims

1. Retention device (100) for a flexible cable (F); said device (100) having a longitudinal axis (X) and comprising:
- a perimeter wall (2) that defines an axial cavity (1) intended to house said flexible cable (F);
- two axial openings (11) disposed at the ends of said perimeter wall (2) and in communication with said axial cavity (1);
- at least two radial openings (12, 13) obtained in said perimeter wall (2) extending parallel to the axis (X) and in communication with said axial cavity (1); said at least two radial openings (12, 13) comprising a first radial opening (12) and at least one second radial opening (13);
- a slot (14) obtained in said perimeter wall (2) and disposed between, and connecting each of, said at least two radial openings (12, 13) so as to have a continuous radial opening extending between the two axial openings (11), in such a way that the flexible cable (F) can be inserted in the radial openings (12, 13) and in the slot (14), in a zigzag configuration;
- first fastening/unfastening means (3) disposed in said perimeter wall (2) to fasten/unfasten the device (100) with another device (100);
wherein the retention device (100) further comprises:
second fastening/unfastening means (3) disposed in said perimeter wall (2) with an angular spacing in circumferential direction around the perimeter wall (2) from said first fastening/unfastening means (3), and
third fastening/unfastening means (3) disposed in said perimeter wall (2) with an angular spacing in circumferential direction around the perimeter wall (2) from said first fastening/unfastening means (3), and from said second fastening/unfastening means (3),
in such a way that a retention device (100) can be fastened to three retention devices (100) in different mounting configurations,
wherein said perimeter wall (2) comprises at least:
a) a central portion (10) placed along said longitudinal axis (X) and defining said first radial opening (12),
b) a first and a second end portion (20), respectively placed along said longitudinal axis (X) and opposite one each other with respect to the ends of said central portion (10), each of said first and second end portions (20) defining one of said second radial opening (13),
**characterized in that**
said central portion (10) and said end portion (20) of said perimeter wall (2) have a "C"-shaped cross-section with the first radial opening (12) of said central portion (10) being rotated by 180° around the longitudinal axis (X) with respect to said second radial openings (13) of the first and second end portions (20).

2. The device (100) of claim 1, wherein each of said first, second and third fastening/unfastening means (3) are of male-female type and comprise:
- a male element (31) that projects from the perimeter wall (2); and
- at least one female element (30) consisting in an opening obtained in the perimeter wall; said opening of the female element (30) being intended to house the male element.

3. The device (100) of claim 2,wherein the female element (30) of each of said fastening/unfastening means (3) comprises two openings and the male element (31) of each one of said fastening/unfastening means (3) is disposed between the two openings of the female element (30).

4. The device (100) of claim 2 or 3, wherein the male element (31) of each one of said fastening/unfastening means (3) comprises two elastic tabs (32) that can be inserted in an opening of the female element (30) of another device (100) in elastic snap mode.

5. The device (100) of claim 4, wherein each elastic tab (32) of each male element (31) comprises a retention tooth (33) with a tapered surface (34).

6. The device (100) of any preceding claims, wherein said end portions (20) of the perimeter wall (2) are flexible.

7. The device (100) of any preceding claims, wherein said perimeter wall (2) comprises two end portions (20) disposed at the ends of the perimeter wall, and at least one intermediate portion (15) is disposed between the central portion (10) and at least one of said two end portions (20); wherein slots (14) are provided between the central portion (10) and the intermediate portion (15) and between the intermediate portion (15) and the end portion (20).

8. The device (100) of claim 7, wherein said device (100) comprises hinges (C) that connect said at least one intermediate portion (15) to the central portion (10) and to the end portion (20), in such a way to rotate the intermediate portion (15) and the end portion (20) one with respect to the other and with respect to the central portion (10).

9. The device (100) of any preceding claims, wherein said first, second and third fastening/unfastening means (3) are disposed in said central portion (10) of the perimeter wall (2) of the device (100).

10. The device (100) of any one of the preceding claims, wherein said perimeter wall (2) has a polygonal shape, in cross-section, with at least four sides (22) and said first, second and third fastening/unfastening means (3) are disposed respectively in three sides (22) of said perimeter wall.

11. The device (100) of claim 10, wherein said perimeter wall (2) has an octagonal shape, in cross-section, with at least four long sides (22) and four short sides (23) that join the long sides (22), wherein said first, second and third fastening/unfastening means (3) are disposed respectively in three long sides (22) of said perimeter wall.

## Patentansprüche

1. Haltevorrichtung (100) für ein flexibles Kabel (F); wobei besagte Vorrichtung (100) über eine Längsachse (X) verfügt und folgendes aufweist:
- eine Umfassungswand (2), die einen axialen Hohlraum (1) definiert, um das besagte flexible Kabel (F) aufzunehmen;
- zwei axiale Öffnungen (11), die an den Enden der besagten Umfassungswand (2) angeordnet sind und mit besagtem axialen Hohlraum (1) in Verbindung stehen;
- mindestens zwei radiale Öffnungen (12, 13), die in besagter Umfassungswand (2) gewonnen werden, die sich parallel zur Achse (X) erstrecken und in Verbindung mit besagtem axialen Hohlraum (1) stehen; wobei mindestens zwei radiale Öffnungen (12, 13) eine erste radiale Öffnung (12) und mindestens eine zweite radiale Öffnungen (13) umfassen;
- einen Schlitz (14), der in besagter Umfassungswand (2) gewonnen wird und zwischen den mindestens zwei radiale Öffnungen (12, 13) angeordnet ist und diese jeweils verbindet, so dass man eine kontinuierliche radiale Öffnung hat, die sich zwischen den beiden axialen Öffnungen (11) erstreckt so, dass das flexibles Kabel (F) in die radiale Öffnungen (12, 13) und in den Schlitz (14) in einer zickzackförmigen Konfiguration eingeführt werden kann;
- erstes Befestigungs-/Entriegelungsmittel (3), das in besagter Umfassungswand (2) angeordnet ist, um die Vorrichtung (100) mit einer anderen Vorrichtung (100) zu befestigen/ zu lösen;
wobei die Haltevorrichtung (100) weiter folgendes umfasst:
zweites Befestigungs-/Entriegelungsmittel (3), das in besagter Umfassungswand (2) mit einem Winkelabstand in Umfangsrichtung um die Umfassungswand (2) von besagtem ersten Befestigungs-/Entriegelungsmittel (3) angeordnet ist, und
drittes Befestigungs-/Entriegelungsmittel (3), das in besagter Umfassungswand (2) mit einem Winkelabstand in Umfangsrichtung um die Umfassungswand (2) von besagtem ersten Befestigungs-/Entriegelungsmittel (3) und von besagtem zweiten Befestigungs-/Entriegelungsmittel (3) angeordnet ist,
so, dass eine Haltevorrichtung (100) an drei Haltevorrichtungen (100) in unterschiedlichen Montagekonfigurationen befestigt werden kann,
wobei besagte Umfassungswand (2) mindestens folgendes umfasst:
a) einen zentralen Abschnitt (10), der entlang besagter Längsachse (X) angeordnet ist und die besagte erste radiale Öffnung (12) definiert,
b) einen ersten und einen zweiten Abschnitt (20), die jeweils entlang der besagter Längsachse (X) angeordnet sind und in Bezug auf die Enden des besagten zentralen Abschnitts (10) einander gegenüber liegen, jeder der besagten ersten und zweiten Endabschnitte (20) definiert eine der besagten zweiten radialen Öffnung (13),
die sich dadurch auszeichnet, dass
besagter zentraler Abschnitt (10) und besagter Endabschnitt (20) der besagten Umfassungswand (2) einen "C"-förmigen Querschnitt haben, wobei die erste radiale Öffnung (12) des besagten zentralen Abschnitts (10) um 180° um die Längsachse (X) in Bezug auf besagte zweite radiale Öffnungen (13) der ersten und zweiten Endabschnitte (20) gedreht ist.

2. Die Vorrichtung (100) gemäß Anspruch 1, wobei jedes der besagten ersten, zweiten und dritten Befestigungs-/Entriegelungsmittel (3) vom Typ Stecker-Buchse ist und folgendes umfasst:
- ein männliches Element (31), das aus der Umfassungswand (2) herausragt; und
- mindestens ein weibliches Element (30), das aus einer Öffnung besteht, die in der Umfassungswand erhalten wird; besagte Öffnung des weiblichen Elements (30) muss das männliche Element aufnehmen.

3. Die Vorrichtung (100) gemäß Anspruch 2 wobei das weibliche Element (30) von jedem der besagten Befestigungs-/Entriegelungsmittel (3) zwei Öffnungen umfasst und das männliche Element (31) von jedem der besagten Befestigungs-/Entriegelungsmittel (3) zwischen zwei Öffnungen des weiblichen Elements (30) angeordnet ist.

4. Die Vorrichtung (100) gemäß Anspruch 2 oder 3, wobei das männliche Element (31) von jedem der besagten Befestigungs-/Entriegelungsmittel (3) zwei elastische Laschen umfasst (32), die in eine Öffnung des weiblichen Elements (30) einer anderen Vorrichtung (100) im elastischen Schnappmodus eingeführt werden können.

5. Die Vorrichtung (100) gemäß Anspruch 4, wobei jede elastische Lasche (32) des männlichen Elements (31) einen Haltezahn (33) mit einer kegelförmigen Oberfläche (34) umfasst.

6. Die Vorrichtung (100) gemäß einem der vorstehenden Ansprüche, wobei besagte Endabschnitte (20) der Umfassungswand (2) flexible sind.

7. Die Vorrichtung (100) gemäß einem der vorstehenden Ansprüche, wobei besagte Umfassungswand (2) zwei Endabschnitte (20), die an den Enden der Umfassungswand angeordnet sind und mindestens einen Zwischenabschnitt (15), der zwischen dem zentralen Abschnitt (10) und mindestens einem der besagten Endabschnitte (20) angeordnet ist, umfasst; wobei die Schlitze (14) zwischen dem zentralen Abschnitt (10) und dem Zwischenabschnitt (15) und zwischen dem Zwischenabschnitt (15) und dem Endabschnitt (20) vorgesehen sind.

8. Die Vorrichtung (100) gemäß Anspruch 7, wobei besagte Vorrichtung (100) Gelenke (C) umfasst, die mindestens einen Zwischenabschnitt (15) an den zentralen Abschnitt (10) und an den Endabschnitt (20) anschließt und zwar derart, dass der Zwischenabschnitt (15) und der Endabschnitt (20) jeweils in Bezug auf den anderen und in Bezug auf den zentralen Abschnitt (10) drehen.

9. Die Vorrichtung (100) gemäß einem der vorstehenden Ansprüche, wobei besagte erste, zweite und dritte Befestigungs-/Entriegelungsmittel (3) in besagtem zentralen Abschnitt (10) der Umfassungswand (2) der Vorrichtung (100) angeordnet sind.

10. Die Vorrichtung (100) gemäß einem der vorstehenden Ansprüche, wobei besagte Umfassungswand (2) im Querschnitt eine polygonale Form mit mindestens vier Seiten (22) hat und besagte erste, zweite und dritte Befestigungs-/Entriegelungsmittel (3) jeweils an drei Seiten (22) der besagten Umfassungswand angeordnet sind.

11. Die Vorrichtung (100) gemäß Anspruch 10, wobei besagte Umfassungswand (2) im Querschnitt eine achteckige Form mit mindestens vier langen Seiten (22) und vier kurzen Seiten (23) hat, die die langen Seiten (22) verbinden, wobei besagte erste, zweite und dritte Befestigungs-/Entriegelungsmittel (3) jeweils in drei Längsseiten (22) der besagten Umfassungswand angeordnet sind.

## Revendications

1. Dispositif de retenue (100) pour câble flexible (F) ; ledit dispositif (100) ayant un axe longitudinal (X) et comprenant :
- une paroi périphérique (2) qui définit une cavité axiale (1) destinée à abriter ledit câble flexible (F) ;
- deux ouvertures axiales (11) disposées aux extrémités de ladite paroi périphérique (2) et communiquant avec ladite cavité axiale (1) ;
- au moins deux ouvertures radiales (12, 13) obtenues dans ladite paroi périphérique (2) s'étendant parallèlement à l'axe (X) et communiquant avec ladite cavité axiale (1) ; lesdites au moins deux ouvertures radiales (12, 13) comprenant une première ouverture radiale (12) et au moins une deuxième ouverture radiale (13) ;
- une fente (14) obtenue dans ladite paroi périphérique (2) et disposée entre, et reliant chacune desdites au moins deux ouvertures radiales (12, 13) de manière à avoir une ouverture radiale continue s'étendant entre les deux ouvertures axiales (11), de telle manière que le câble flexible (F) puisse être inséré dans les ouvertures radiales (12, 13) et dans la fente (14), dans une configuration en zigzag ;
- des premiers moyens de fixation/décrochage (3) disposés dans ladite paroi périphérique (2) pour fixer/décrocher le dispositif (100) avec un autre dispositif (100) ;
dans lequel le dispositif de retenue (100) comprend en outre :
des deuxièmes moyens de fixation/décrochage (3) disposés dans ladite paroi périphérique (2) avec un espacement angulaire en direction circonférentielle autour de la paroi périphérique (2) par rapport auxdits premiers moyens de fixation/décrochage (3), et
des troisièmes moyens de fixation/décrochage (3) disposés dans ladite paroi périphérique (2) avec un espacement angulaire en direction circonférentielle autour de la paroi périphérique (2) par rapport auxdits premiers moyens de fixation/décrochage (3), et par rapport auxdits deuxièmes moyens de fixation/décrochage (3),
de manière à ce qu'un dispositif de retenue (100) puisse être fixé à trois dispositifs de retenue (100) dans différentes configurations de montage,
dans lequel ladite paroi périphérique (2) comprend au moins :
a) une partie centrale (10) placée le long dudit axe longitudinal (X) et définissant ladite première ouverture radiale (12),
b) une première et une seconde partie terminale (20), respectivement placées le long dudit axe longitudinal (X) et opposées l'une à l'autre par rapport aux extrémités de ladite partie centrale (10), chacune desdites première et seconde parties terminales (20) définissant une desdites secondes ouvertures radiales (13),
**caractérisé par le fait que**
ladite partie centrale (10) et ladite partie terminale (20) de ladite paroi périphérique (2) ont une section transversale en forme de « C », la première ouverture radiale (12) de ladite partie centrale (10) étant tournée de 180° autour de l'axe longitudinal (X) par rapport auxdites secondes ouvertures radiales (13) des première et seconde parties terminales (20).

2. Dispositif (100) selon la revendication 1, dans lequel chacun desdits premiers, deuxièmes et troisièmes moyens de fixation/décrochage (3) sont de type mâle-femelle et comprennent :
- un élément mâle (31) qui dépasse de la paroi périphérique (2) ; et
- au moins un élément femelle (30) consistant en une ouverture obtenue dans la paroi périphérique ; ladite ouverture de l'élément femelle (30) étant destinée à abriter l'élément mâle.

3. Dispositif (100) selon la revendication 2, dans lequel l'élément femelle (30) de chacun desdits moyens de fixation/décrochage (3) comprend deux ouvertures et l'élément mâle (31) de chacun desdits moyens de fixation/décrochage (3) est disposé entre les deux ouvertures de l'élément femelle (30).

4. Dispositif (100) selon la revendication 2 ou 3, dans lequel l'élément mâle (31) de chacun desdits moyens de fixation/décrochage (3) comprend deux languettes élastiques (32) qui peuvent être insérées dans une ouverture de l'élément femelle (30) d'un autre dispositif (100) par encliquetage élastique.

5. Dispositif (100) selon la revendication 4, dans lequel chaque languette élastique (32) de chaque élément mâle (31) comprend une dent de retenue (33) avec une surface conique (34).

6. Dispositif (100) selon l'une quelconque des revendications précédentes, dans lequel lesdites parties terminales (20) de la paroi périphérique (2) sont flexibles.

7. Dispositif (100) selon l'une quelconque des revendications précédentes, dans lequel ladite paroi périphérique (2) comprend deux parties terminales (20) disposées aux extrémités de la paroi périphérique, et au moins une partie intermédiaire (15) disposée entre la partie centrale (10) et au moins une desdites deux parties terminales (20) ; dans lequel des fentes (14) sont prévues entre la partie centrale (10) et la partie intermédiaire (15) et entre la partie intermédiaire (15) et la partie terminale (20).

8. Dispositif (100) selon la revendication 7, dans lequel ledit dispositif (100) comprend des charnières (C) qui relient ladite au moins une partie intermédiaire (15) à la partie centrale (10) et à la partie terminale (20), de manière à faire tourner la partie intermédiaire (15) et la partie terminale (20) l'une par rapport à l'autre et par rapport à la partie centrale (10).

9. Dispositif (100) selon l'une quelconque des revendications précédentes, dans lequel lesdits premiers, deuxièmes et troisièmes moyens de fixation/décrochage (3) sont disposés dans ladite partie centrale (10) de la paroi périphérique (2) du dispositif (100).

10. Dispositif (100) selon l'une quelconque des revendications précédentes, dans lequel ladite paroi périphérique (2) a une forme polygonale, en section transversale, avec au moins quatre côtés (22) et lesdits premiers, deuxièmes et troisièmes moyens de fixation/décrochage (3) sont disposés respectivement sur trois côtés (22) de ladite paroi périphérique.

11. Dispositif (100) selon la revendication 10, dans lequel ladite paroi périphérique (2) a une forme octogonale, en section transversale, avec au moins quatre côtés longs (22) et quatre côtés courts (23) qui rejoignent les côtés longs (22), dans lequel lesdits premiers, deuxièmes et troisièmes moyens de fixation/décrochage (3) sont disposés respectivement sur trois côtés longs (22) de ladite paroi périphérique.
